# EUROPEAN PATENT APPLICATION

(11) **EP 3 470 334 A1**
(43) Date of publication of application: **17.04.2019**
(21) Application number: 18759836.2
(22) Date of filing: 11.04.2018
(51) Int. Cl.: B64C 27/50, B64C 11/28

(54) **FOLDING PROPELLER, POWER ASSEMBLY, AND UNMANNED AERIAL VEHICLE**

(30) Priority: 15.08.2017 CN 201721024988 U
(71) Applicant: Autel Robotics Co., Ltd., Shenzhen, Guangdong 518055 (CN)
(72) Inventor: LUO, Dongdong, Shenzhen Guangdong 518055 (CN); SU, Wenbing, Shenzhen Guangdong 518055 (CN); SUN, Wei, Shenzhen Guangdong 518055 (CN); ZHANG, Hailang, Shenzhen Guangdong 518055 (CN)
(74) Representative: Gulde & Partner
(86) International application number: PCT/CN2018/082659
(87) International publication number: WO 2019/033769

(57) **Abstract**

The present application discloses a foldable propeller, a power assembly and an unmanned aerial vehicle. The foldable propeller includes: a propeller hub, at least two blade assemblies, and a connecting member used for pivotally connecting the propeller hub and the blade assemblies, where each blade assembly is rotatable with respect to the propeller hub, and a rotation axis of each blade assembly is perpendicular to an axial central line of the propeller hub. In the foldable propeller provided by the embodiments of the present application, the blade assemblies can be folded upward or downward with respect to the propeller hub, improving spatial utilization and portability. Moreover, when applied to a tilt-rotor unmanned aerial vehicle, the foldable propeller can further be folded during flight, reducing a flight resistance.

## Description

This application claims priority to Chinese Patent Application No. 201721024988.0, filed on August 15, 2017 and entitled "FOLDABLE PROPELLER, POWER ASSEMBLY AND UNMANNED AERIAL VEHICLE", which is incorporated herein by reference in its entirety.

### Technical Field

The present application relates to the field of unmanned aerial vehicles, and in particular, to a foldable propeller, a power assembly using the foldable propeller and an unmanned aerial vehicle using the power assembly.

### Related Art

An unmanned aerial vehicle is an unmanned aircraft that controls flight attitude by using a radio remote control device and a built-in program. Due to advantages such as flexibility, quick response, unmanned driving, and low operation requirement, the unmanned aerial vehicle has been widely applied to many fields such as aerial photographing, vegetation protection, power line inspection, and rescuing. With the development of the wireless Internet, wireless local area network, and image processing technologies, the unmanned aerial vehicle becomes popular among increasingly more users.

Currently, blades of a propeller and a propeller hub are usually integrally formed by injection molding in the unmanned aerial vehicle design. Therefore, the blades of the propeller cannot be folded, causing the unmanned aerial vehicle to be large in size, inconvenient to carry, and have low in spatial utilization. On the other hand, during a horizontal cruise, a tilt-rotor unmanned aerial vehicle usually can start only a front-end power assembly and stop working of a rear-end power assembly. In this case, if a propeller that is mounted on a rear end power component and that has stopped working cannot be folded, the tilt-rotor unmanned aerial vehicle produces a flight resistance in the horizontal cruise process. This not only increases wear of the propeller mounted on the rear-end power assembly, but also affects the flight of the tilt-rotor unmanned aerial vehicle in some degree.

Therefore, the propeller technology of the existing unmanned aerial vehicle still needs to be improved and developed.

### SUMMARY

Embodiments of the present application provide a foldable propeller, a power assembly and an unmanned aerial vehicle, so as to resolve the problem that blades of an existing propeller cannot be folded, causing an unmanned aerial vehicle to be large in size, inconvenient to carry and low in spatial utilization.

In order to resolve the foregoing problem, an embodiment of the present application provides a foldable propeller, including: a propeller hub, at least two blade assemblies, and a connecting member used for pivotally connecting the propeller hub and the blade assemblies, where each blade assembly is rotatable with respect to the propeller hub, and a rotation axis of each blade assembly is perpendicular to an axial central line of the propeller hub.

In some embodiments, the blade assembly includes a blade and a pivot connection member mounted at an end of the blade which is pivotally connected to the propeller hub; the pivot connection member includes a pivot connection hole, an axial central line of the pivot connection hole being perpendicular to the axial central line of the propeller hub; and the connecting member penetrates the pivot connection hole to mount the blade on the propeller hub.

In some embodiments, the end of the blade which is pivotally connected to the propeller hub includes a first side and a second side that are opposite to each other; the pivot connection member further includes a first abutting portion and a second abutting portion that are opposite to each other, and a communicating portion connecting the first abutting portion and the second abutting portion, the pivot connection hole being provided in the communicating portion and penetrating the first abutting portion and the second abutting portion; and the communicating portion penetrates the end of the blade which is pivotally connected to the propeller hub, a side of the first abutting portion which faces the second abutting portion abuts against the first side, and a side of the second abutting portion which faces the first abutting portion abuts against the second side.

In some embodiments, the pivot connection member is a metal member and is connected to the blade in an injection molding manner.

In some embodiments, the propeller hub includes a first clamping arm and a second clamping arm that are opposite to each other; and the blade assembly is mounted between the first clamping arm and the second clamping arm, and a uniform gap is provided between the blade assembly and the first clamping arm, and/or a uniform gap is provided between the blade assembly and the second clamping arm.

In some embodiments, the propeller hub includes limiting stoppers provided corresponding to the blade assemblies, and when the foldable propeller rotates, the limiting stoppers abut against ends of the blade assemblies which are pivotally connected to the propeller hub.

In some embodiments, the propeller hub includes limiting grooves provided corresponding to the blade assemblies, and each limiting groove keeps consistent with a root shape of the corresponding blade assembly.

In order to resolve the foregoing problem, an embodiment of the present invention provides a power assembly, including: a driving device and the foldable propeller, as described above, mounted on the driving device.

In order to resolve the foregoing problem, an embodiment of the present invention provides an unmanned aerial vehicle, including, the power assembly as described above.

In order to resolve the foregoing problem, an embodiment of the present invention provides another unmanned aerial vehicle, including:
a vehicle body;
a main wing, fixedly mounted at the vehicle body;
a stub wing, fixedly mounted at the main wing;
a power assembly, including a front-end power assembly and a rear-end power assembly, the front-end power assembly being mounted at a front end of the stub wing, and the rear-end power assembly being mounted at a rear end of the stub wing;
   and,
an empennage, fixedly mounted at the rear of the vehicle body;
where the rear-end power assembly is one of the power assemblies as described above, and in the rear-end power assembly, the blade assembly can be folded upward with respect to the propeller hub.

In some embodiments, the front-end power assembly is one of the power assemblies as described above, and in the front-end power assembly, the propeller hub includes limiting stoppers provided corresponding to the blade assemblies, and when the foldable propeller rotates, the limiting stoppers abut against ends of the blade assemblies which are pivotally connected to the propeller hub.

The embodiments of the present application have the following beneficial effects: in the foldable propeller, the power assembly and the unmanned aerial vehicle provided by the embodiments of the present application, the blade assemblies of the foldable propeller are designed to be rotatable with respect to the propeller hub, and the rotation axis of the blade assemblies is perpendicular to the axial central line of the propeller hub, so that the blades of the foldable propeller can be folded upward or downward with respect to the propeller hub. On one hand, the spatial utilization can be improved when an unmanned aerial vehicle using the foldable propeller is stored, making it easier to carry the unmanned aerial vehicle. On the other hand, if applied to a tilt-rotor unmanned aerial vehicle, the foldable propeller can further be folded when the tilt-rotor unmanned aerial vehicle is in a horizontal cruise. As such, even if the foldable propeller stops working, it does not affect the flight of the tilt-rotor unmanned aerial vehicle.

Further, the blades of the foldable propeller are folded based on the pivot connection member, achieving higher reliability. The tightness between the propeller blades and the propeller hub will not be affected by material characteristics or a manufacture process, and hole expansion will not occur, thereby prolonging the service life of the foldable propeller.

### BRIEF DESCRIPTION OF THE DRAWINGS

One or more embodiments are illustrated with reference to pictures in the corresponding accompanying drawings. The illustrations do not limit the embodiments. Elements having identical reference numerals in the accompanying drawings represent similar elements. The figures in the accompanying drawings do not constitute any scaling limitation, unless otherwise specified.
FIG. 1 is a schematic structural perspective view of a foldable propeller according to an embodiment of the present application;
FIG. 2 is a schematic structural perspective view when the foldable propeller shown in FIG. 1 is in a downward folded state;
FIG. 3 is an exploded perspective view of the foldable propeller shown in FIG. 1;
FIG. 4 is a schematic structural perspective view of a propeller hub of the foldable propeller shown in FIG. 3;
FIG. 5 is a schematic structural perspective view of another foldable propeller according to an embodiment of the present application;
FIG. 6 is a schematic structural perspective view when the foldable propeller shown in FIG. 5 is in an upward folded state;
FIG. 7 is a schematic structural perspective view of a propeller hub of the foldable propeller shown in FIG. 5;
FIG. 8 is an exploded perspective view of a power assembly according to an embodiment of the present application;
FIG. 9 is an exploded perspective view of another power assembly according to an embodiment of the present application;
FIG. 10 is a schematic structural perspective view of a rotor spider of the power assembly shown in FIG. 9;
FIG. 11 is a schematic structural perspective view of the rotor spider shown in FIG. 10 seen from another viewing angle
FIG. 12 is a schematic structural perspective view of a mounting member shown in FIG. 9;
FIG. 13 is a schematic structural perspective view of an unmanned aerial vehicle according to an embodiment of the present application; and
FIG. 14 is a schematic structural perspective view of another unmanned aerial vehicle according to an embodiment of the present application.

### DETAILED DESCRIPTION

To make the present application easier to understand, the present application is described in further detail below with reference to the accompanying drawings and specific embodiments. It should be noted that when an element is expressed as being "fixed on" another element, it can be directly on the other element, or there can be one or more intermediate elements between the two elements. When an element is expressed as being "connected to" another element, it can be directly connected to the other element, or there can be one or more intermediate elements between the two elements. The terms "upper", "lower", "inside", "outside", "top", "bottom", and so on that are used to indicate orientation or position relationships in the specification are based on the orientation or position relationships shown in the accompanying drawings, and are merely used for describing the present application and simplifying the description rather than indicating or implying that indicated apparatuses or elements should have particular orientations and should be constructed and operated at the particular orientations. Therefore, such terms cannot be construed as limitations on the present application. In addition, terms such as "first", "second" and "third" are merely used for the descriptive purpose, and cannot be interpreted as indicating or implying relative importance.

Unless otherwise specified, meanings of all technical and scientific terms used in the specification are the same as what is generally understood by a person skilled in the technical fiend of the present application. The terms used in the specification of the present application are merely used for the purpose of describing the specific embodiments but are not intended to limit the present application. The term "and/or" used in the specification includes combinations of any or all of one or more associated items that are listed.

In addition, technical features included in different embodiments of the present application that are described in the following can be combined with each other as long as no conflict is caused.

In a foldable propeller provided by an embodiment of the present application, blade assemblies of the foldable propeller are designed to be rotatable with respect to a propeller hub, and a rotation axis of the blade assemblies is perpendicular to an axial central line of the propeller hub, so that blades of the foldable propeller can be folded upward or downward with respect to the propeller hub; the foldable propeller is convenient to store and carry, and can be applied to any type of unmanned aerial vehicle, such as a rotor unmanned aerial vehicle and a tilt-rotor unmanned aerial vehicle. The rotor unmanned aerial vehicle includes, but is not limited to: a single rotor unmanned aerial vehicle, a double-rotor unmanned aerial vehicle, a quad-rotor unmanned aerial vehicle, a hex-rotor unmanned aerial vehicle, and so on. It should be noted that in this embodiment, it is assumed by default that a first side where the blade assemblies are connected to the propeller hub is an upper side, and a side where the propeller hub is connected to a corresponding driving device is a lower side.

Particularly, if the foldable propeller provided by the present application is applied to a tilt-rotor unmanned aerial vehicle, when the tilt-rotor unmanned aerial vehicle is in a horizontal cruise state, one or more power assemblies can be stopped. In this case, blades of foldable propellers in the power assemblies can be folded backward under the effect of wind (that is, the blades of the foldable propeller are folded upward with respect to the propeller hub), and the flight of the tilt-rotor unmanned aerial vehicle will not be affected, thereby implementing a cruise with low energy consumption and also reducing wear of the blades of the propeller.

The foldable propeller, the power assembly and the unmanned aerial vehicle provided by the present application are further described in the following with reference to the accompanying drawings.

### Embodiment 1

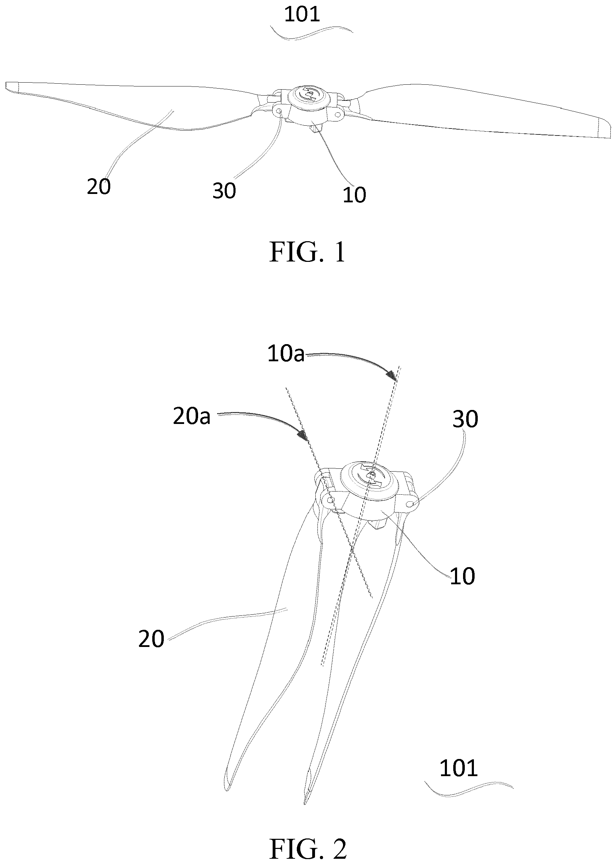

Referring to FIG. 1 and FIG. 2, FIG. 1 and FIG. 2 show a foldable propeller 101 according to an embodiment of the present application. The foldable propeller 101 includes: a propeller hub 10, two blade assemblies 20 and two connecting members 30. The propeller hub 10 is pivotally connected to the blade assemblies 20 through the connecting members 30. Each blade assembly 20 is rotatable with respect to the propeller hub 10, and a rotation axis 20a of each blade assembly 20 is perpendicular to an axial central line 10a of the propeller hub 10. The rotation axis 20a can be an axial central line of the connecting member 30. Therefore, in this embodiment of the present application, the blade assemblies 20 can be folded upward or downward with respect to the propeller hub 10.

In this embodiment, when the foldable propeller 101 is perpendicular to the ground and no external force is applied on the foldable propeller 101, as shown in FIG. 2, the blade assemblies 20 are folded downward with respect to the propeller hub 10 under the effect of gravity, presenting a downward folded state of the blade assemblies 20 with respect to the propeller hub 10. When the foldable propeller 101 is driven by a corresponding driving device, the blade assemblies 20 are swung out under the effect of a centrifugal force away from the rotation center (the propeller hub 10). When the centrifugal force on the blade assemblies 20 is much larger than the weight of the blade assemblies 20, the blade assemblies 20 can rotate in a plane where the propeller hub 10 is located, presenting an unfolded state shown in FIG. 1. In addition, in this embodiment, when the foldable propeller 101 rotates, the blade assemblies 20 are further under the effect of a vertically upward pulling force. However, as long as the centrifugal force on the blade assemblies 20 is ensured to be much larger than the pulling force through a proper structure design and rotation speed, the blade assemblies 20 can constantly rotate in the plane where the propeller hub 10 is located, thereby implementing normal flight.

It should be noted that, although two blade assemblies 20 and two connecting members 30 are taken as an example for description in this embodiment, in other embodiments, more blade assemblies 20 and connecting members 30 whose quantity corresponds to that of the blade assemblies 20 can be included.

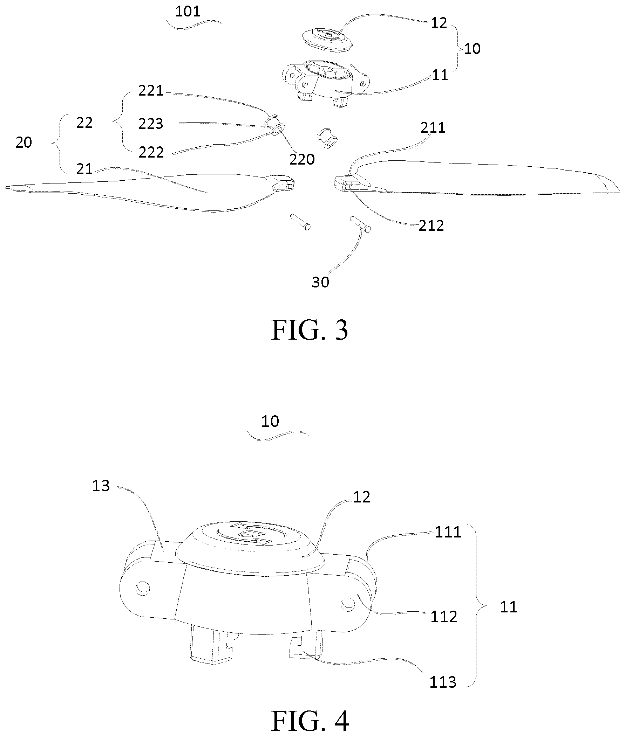

In this embodiment, as shown in FIG. 3 and FIG. 4, the propeller hub 10 includes a propeller housing 11 and a propeller cap 12 mounted at the top of the propeller housing 11. The propeller housing 11 and the propeller cap 12 may be fixedly connected by using a glue or ultrasonic waves.

The propeller housing 1 and the blade assembly 20 are pivotally connected through the connecting member 30. A pivotal connection point of the propeller housing 11 with the blade assembly 20 is provided with a first clamping arm 111 and a second clamping arm 112 that are opposite to each other. The blade assembly 20 is flexibly mounted between the first clamping arm 111 and the second clamping arm 112 through the connecting member 30. Moreover, a uniform gap is provided between the blade assembly 20 and the first clamping arm 111, and/or a uniform gap is provided between the blade assembly 20 and the second clamping arm 112. In this embodiment, by setting a proper size of the uniform gap and a proper length of the blade in the blade assembly 20, it is ensured that the centrifugal force on the blade assembly 20 is much larger than the pulling force when the foldable propeller 101 rotates. As such, the blade assembly 20 is prevented from being folded upward with respect to the propeller hub 10 when the foldable propeller 101 rotates, avoiding affecting the flight of the unmanned aerial vehicle. The centrifugal force is a force away from the rotation center (that is, propeller hub 10) which is exerted on the blade assembly 20 when the blade assembly 20 rotates. When the length of the blade of the blade assembly is fixed, the smaller the uniform gap is, the larger the generated centrifugal force is. The pulling force is a force that is generated as the blade assembly 20 pushes a large amount of air backward when the foldable propeller 101 rotates, the pulling force being perpendicular to the blade assembly 20 and is opposite to a forward direction of the unmanned aerial vehicle. When the centrifugal force on the blade assembly 20 is much larger than the pulling force, the pulling force can be ignored. In this case, the blade assembly 20 will not be folded upward and can work normally.

In order to further prevent the blade assemblies 20 from being folded upward with respect to the propeller hub 10 when the foldable propeller 101 rotates, in this embodiment, the propeller hub 10 further includes limiting stoppers 13 provided corresponding to the blade assemblies 20. When the foldable propeller 101 rotates, the limiting stopper 13 abuts against an end of the blade assembly 20 which is pivotally connected to the propeller hub 10, thereby restricting the blade assembly 20 from being folded upward with respect to the propeller hub 10. As shown in FIG. 1, the limiting stopper 13 can be clamped between the first clamping arm 111 and the second clamping arm 112. Besides, when the foldable propeller 101 rotates, the limiting stopper 13 abuts against an upper surface of the end of the blade assembly 20 which is pivotally connected to the propeller hub 10. Alternatively, in some other embodiments, the limiting stopper 13 may also be a boss, and the end of the blade assembly 20 which is pivotally connected to the propeller hub 10 is correspondingly provided with a groove. When the foldable propeller 101 rotates, the boss is inserted into the groove, thereby abutting against the blade assembly 20 horizontally.

Definitely, it should be noted that in actual application, in order to meet different requirements, for example, when the foldable propeller is applied to a tilt-rotor unmanned aerial vehicle, the limiting stopper 13 can also be omitted.

In addition, in this embodiment, the bottom of the propeller housing 11 (that is, a side of the propeller housing 11 which is away from the propeller cap 12) is extended to be provided with a fastening member 113 that is used for rapidly mounting the foldable propeller 101 on or dismounting the foldable propeller 101 from a corresponding driving device. The quantity of the fastening members 113 may be, but is not limited to: 1, 2, 3, 5, and the like. When N fastening members 113 are provided, the N fastening members 113 can be uniformly distributed at the bottom of the propeller housing 11 based on an angle of 360°/N. In this embodiment, three fastening members 113 are provided. The three fastening members 113 are uniformly distributed at the bottom of the propeller housing 11 based on an angle of 120°. Each fastening member 113 is T-shaped, including a connecting portion extended from the bottom of the propeller housing 11 and a snap portion formed at the tail end of the connection portion. Particularly, in order to improve the mounting stability of the foldable propeller 101 on the corresponding driving device, the snap portion of the fastening member 113 has a thickness of or an average thickness of at least 1.2 mm. The fastening member 113 has a height of or an average height of at least 0.3 mm. In this embodiment, by setting the fastening members 113 at the bottom of the propeller housing 11, the foldable propeller 101 can be rapidly mounted on or dismounted from the corresponding driving device. Definitely, in actual application, the fastening member 113 can also be omitted, and the foldable propeller 101 is fixedly mounted on the corresponding driving device in another manner.

In this embodiment, as shown in FIG. 3, the blade assembly 20 includes a blade 21 and a pivot connection member 22 mounted at an end of the blade 21 which is pivotally connected to the propeller hub 10. The pivot connection member 22 includes a pivot connection hole 220. The connecting member 30 penetrates the pivot connection hole 220, to mount the blade 21 between the first clamping arm 111 and the second clamping arm 112 of the propeller hub 10. An axial central line of the pivot connection hole 220 is the rotation axis 20a of the blade assembly 20, and is perpendicular to the axial central line 10a of the propeller hub 10.

Specifically, the end of the blade 21 which is pivotally connected to the propeller hub 10 includes a first side 211 and a second side 212 that are opposite to each other. The pivot connection member 22 is H-shaped, including a first abutting portion 221 and a second abutting portion 222 that are opposite to each other, and a communicating portion 223 connecting the first abutting portion 221 and the second abutting portion 222. The pivot connection hole 220 is provided in the communicating portion 223 and penetrates the first abutting portion 221 and the second abutting portion 222. After the pivot connection member 22 and the blade 21 are assembled, the communicating portion 223 of the pivot connection member 22 penetrates the end of the blade 21 which is pivotally connected to the propeller hub 10. A side of the first abutting portion 221 facing the second abutting portion 222 abuts against the first side 211 of the blade 21, and a side of the second abutting portion 222 facing the first abutting portion 221 abuts against the second side 212 of the blade 21. In this embodiment, by mounting the pivot connection member 22 on the end of the blade 21 which is pivotally connected to the propeller hub 10, direct contact between the blade 21 and the connecting member 30 can be avoided, thereby reducing wear between the blade 21 and the connecting member 30, and prolonging the service life of the foldable propeller 101.

Particularly, in this embodiment, the pivot connection member 22 can be a metal member, such as a metal copper bush or an aluminum alloy work piece. The blade 21 and the pivot connection member 22 can be connected together by means of mold injection. Generally, the material of the blade is plastic, and the material of the connecting member 30 is metal. If the blade 21 and the connecting member 30 are directly connected by means of mold injection, on one hand, the assembly precision between the blade 21 and the connecting member 30 will be reduced due to inherent characteristics of the plastic (such as plastic shrinkage). On the other hand, wear between the blade 21 and the connecting member 30 is severe, and after the blade 21 is folded for many times, a hole expansion phenomenon easily occurs at a joint between the blade 21 and the connecting member 30, affecting the reliability of the foldable propeller 101. In this embodiment, a metal member (the pivot connection member 22) is mounted at the end of the blade 21 which is pivotally connected to the propeller hub 10, the tightness between the blade 21 and the propeller hub 10 will not be affected by material characteristics and a manufacturing process, thereby improving the assembly precision between the blade 21 and the propeller hub 10, and reducing the control precision of the manufacturing process and a reject rate. Moreover, both the pivot connection member 22 and the connecting member 30 are metal members, higher wearing resistance is achieved between the two. Therefore, the hole expansion phenomenon can also be avoided, improving the folding reliability of the foldable propeller 101 and prolonging the service life of the foldable propeller 101.

In this embodiment, the blade assemblies of the foldable propeller are designed to be rotatable with respect to the propeller hub, and the rotation axis of the blade assemblies is perpendicular to the axial central line of the propeller hub, so that the blades of the foldable propeller can be folded upward or downward with respect to the propeller hub. On one hand, the spatial utilization can be improved when an unmanned aerial vehicle using the foldable propeller is stored, making it easier to carry the unmanned aerial vehicle. On the other hand, if applied to a tilt-rotor unmanned aerial vehicle, the foldable propeller can further be folded when the tilt-rotor unmanned aerial vehicle is in a horizontal cruise. As such, even if the foldable propeller stops working, it does not affect the flight of the tilt-rotor unmanned aerial vehicle. Further, the blades of the foldable propeller are folded based on the pivot connection member, achieving higher reliability. The tightness between the propeller blades and the propeller hub will not be affected by material characteristics or a manufacture process, and hole expansion will not occur, thereby prolonging the service life of the foldable propeller.

### Embodiment 2

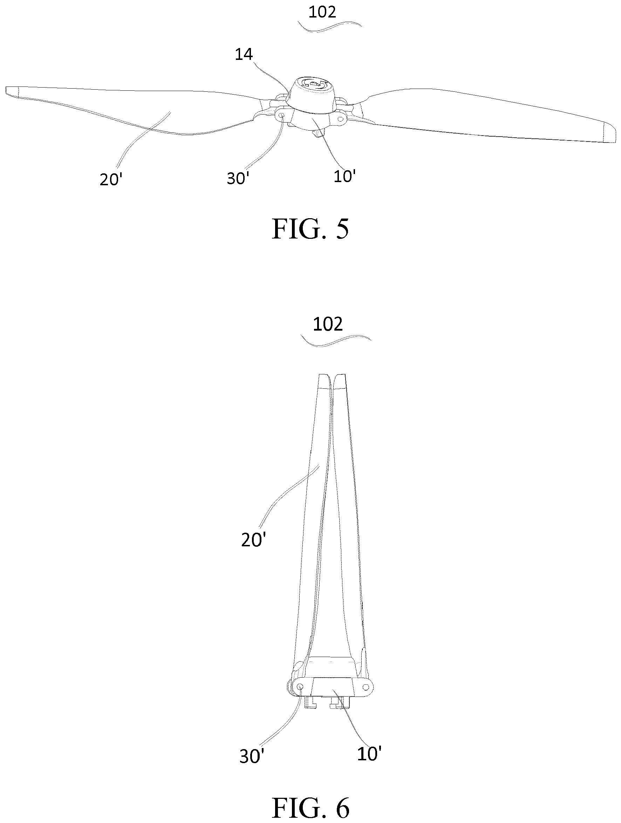

Referring to FIG. 5 to FIG. 7, FIG. 5 to FIG. 7 show another foldable propeller 102 according to an embodiment of the present application. The foldable propeller 102 is substantially the same as the foldable propeller 101 provided in Embodiment 1, and the difference lies in that: in this embodiment, the limiting stoppers 13 are omitted in the propeller hub 10, and the propeller hub 10 further includes limiting grooves 14 that are provided corresponding to the blade assemblies 20, and each limiting groove 14 keeps consistent with a root shape of the corresponding blade assembly 20.

In this embodiment, because the limiting stoppers 13 are removed, when the foldable propeller 102 does not work, the blade assemblies 20 can be folded upward with respect to the propeller hub 10 if a vertically upward force is exerted on the blade assemblies 20. The propeller hub 10 further includes limiting grooves that are provided corresponding to the blade assemblies 20, and each limiting groove 14 keeps consistent with a root shape of the corresponding blade assembly 20. Therefore, when the blade assembles 20 are folded upward with respect to the propeller hub 10, the roots of the blade assemblies 20 can be attached to the corresponding limiting grooves 14, so that the blade assemblies 20 are more compact when being folded upward with respect to the propeller hub 10. Meanwhile, wear between the blade assemblies 20 and the propeller hub 10 is reduced, prolonging the service life of the foldable propeller 102.

### Embodiment 3

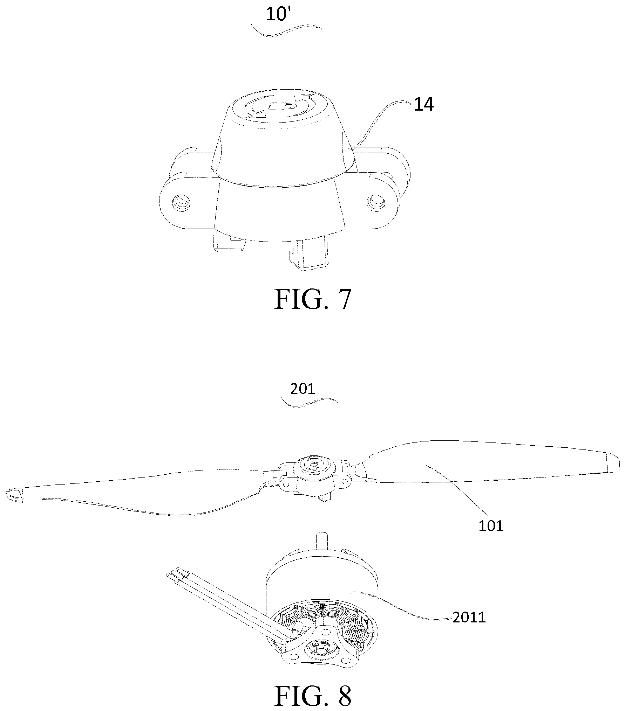

An embodiment of the present application further provides a power assembly 201. As shown in FIG. 8, the power assembly 201 includes a driving device 2011 and a foldable propeller 101/102 in either of the foregoing embodiments. The foldable propeller 101/102 is mounted on the driving device 2011, and the driving device 2011 drives the blade assemblies 20 of the foldable propeller 101/102 to rotate. The driving device 2011 may be a motor of any type. In addition, in FIG. 8, the power assembly 202 including the foldable propeller 101 is taken as an example for description, but it does not limit the embodiment of the present application.

In addition, it can be understood that the power assembly 201 provided in this embodiment includes the structure features and corresponding beneficial effects of the foldable propeller 101/102. For technical details that are not described in this embodiment, refer to Embodiment 1 and Embodiment 2.

### Embodiment 4

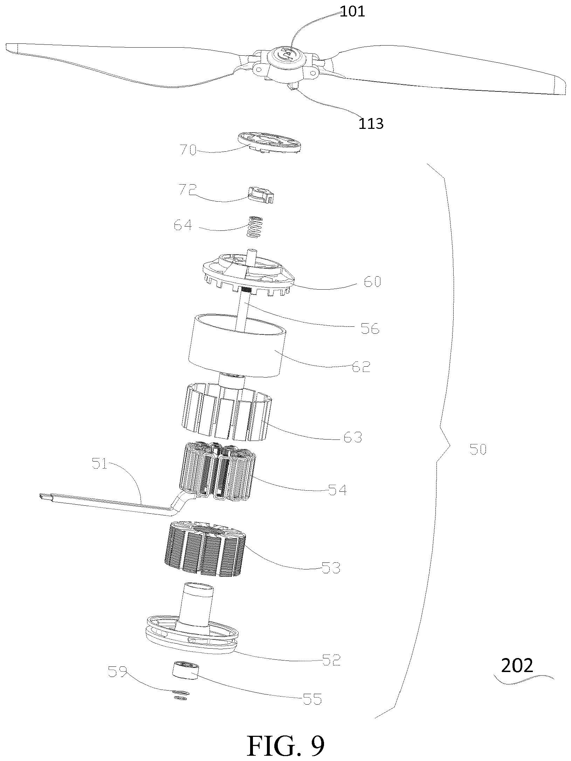

Referring to FIG. 9, FIG. 9 shows another power assembly 202 according to another embodiment of the present application. The power assembly 202 includes a driving device 50 and a foldable propeller 101/102 in either of the foregoing embodiments. The foldable propeller 101/102 is mounted on the driving device 50. In this embodiment, the power assembly 202 including the foldable propeller 101 is taken as an example for description, but it does not limit the embodiment of the present application.

The driving device 50 includes a stator and a rotor. The stator includes a stator seat 52, a coil former 53, and a plurality of coils 54 provided on the coil former 53. The plurality of coils 54 is connected to a power supply through a power line 51. The stator seat 52 supports a motor shaft 56 through rotation of a bearing 55. The stator seat 52 is fixed on a vehicle body of an unmanned aerial vehicle through a gasket 59.

The rotor is fixed on the motor shaft 56. The rotor includes a rotor spider 60, a rotor sleeve 62, and a plurality of magnetic members 63 corresponding to the stator coils 54. The rotor sleeve 62 is mounted at peripheral edges of the rotor spider 60. The plurality of magnetic members 63 is mounted in the rotor sleeve 62.

A mounting member 70 for rapidly mounting and dismounting the foldable propeller 101 is fixed at the top of the rotor spider 60. The mounting member 70 cooperates with the fastening member 113 of the foldable propeller 101 to complete mounting and dismounting of the foldable propeller 101. An elastic assembly that facilitates rapid dismounting is provided between the rotor spider 60 and the mounting member 70. The elastic assembly includes a button 72 and an elastic member 64, such as a spring, mounted between the button 72 and the rotor spider 60.

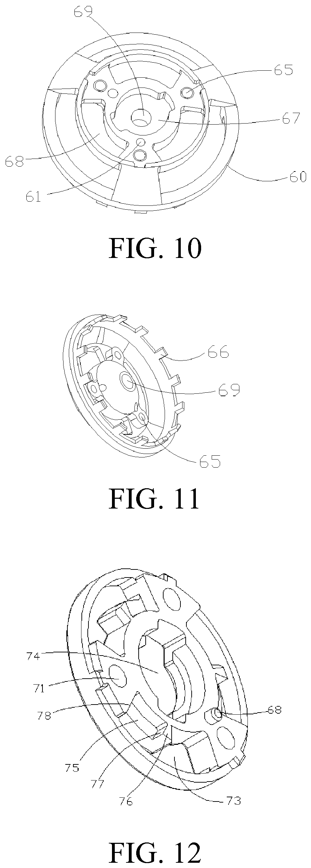

Referring to FIG. 10 and FIG. 11, the center of the rotor spider 60 is provided with a shaft hole 69 for the motor shaft 56 to pass through. A plurality of flanges 66 for fixing the rotor sleeve 62 is extended from the edge of the rotor spider 60. A middle portion of the rotor spider 60 is provided with multiple screw holes 61 for fixing the mounting member 70. The middle portion of the rotor spider 60 is provided with a button positioning groove 67. An external position of the middle portion of the rotor spider 60 is provided with a plurality of vent holes 68.

Referring to FIG. 12, the mounting member 70 is provided with a screw hole 71, and is fixed on the rotor spider 60 by using a screw fitting with the screw holes 71 and 65. The mounting member 70 is provided with a travel groove 74 corresponding to the elastic assembly. The button 72 of the elastic assembly can reciprocate up and down in the travel groove 74. The mounting member 70 is further provided with a guide hole 73, and a mounting portion is provided on a rear side of the mounting member 70. The guide hole 73 includes an alignment hole with a relatively large aperture and a guide hole with a relatively small aperture. The mounting member 70 is further provided with a positioning pin 68.

The mounting portion is used for fixing and limiting the snap portion of the fastening member 113 of the foldable propeller 101. The mounting portion includes a fastening tenon 76, a mounting groove 75, and stopping walls 77 and 78 on two sides of the mounting groove 75. The snap portion of the fastening member 113 crosses the fastening tenon 76 as the propeller rotates, and falls in the mounting groove 75 in an alignment manner. Moreover, the snap portion of the fastening member 113 is limited in the mounting groove by the stopping wall 77 and 78 on two sides. Meanwhile, under the effect of the elastic member 64 and the button 72 between the propeller and the rotor spider of the driving device, the unmanned aerial vehicle can be protected from a crash accident due to the design of the propeller.

In addition, in this embodiment, a prompt of a locked the rotation direction can be marked on the propeller cap 12 or the blade 21 of the foldable propeller 101.

In use, the fastening member 113 of the foldable propeller 101 is aligned with the larger-aperture alignment hole of the guide hole 73 in the mounting member 70, so that the fastening members 113 of the foldable propeller 101 pass through the alignment hole simultaneously. At this point, the user holds the rotor sleeve 62 of the driving device 50 with one hand, aligns the axial central line of the foldable propeller 101 with the motor shaft 56 of the driving device 50 with the other hand, and presses down the foldable propeller 101 until the elastic member 64 reaches its minimum amount of compression. At this point, the user rotates the foldable propeller 101 according to the locked rotation direction indicated on the blade 21 or the propeller cap 12, until the fastening members 113 of the foldable propeller 101 touch the first stopping wall 77 of the mounting member 70. Then, the user releases the hand. Under the effect of the elastic member 64, the fastening members 113 of the foldable propeller 101 are clamped into the mounting groove 75 of the mounting member 70, completing the mounting of the propeller.

Likewise, when dismounting the foldable propeller 101, the user holds the rotor sleeve 62 of the driving device 50 with one hand, and slightly presses down the foldable propeller 101 with the other hand until the elastic member 64 reaches its minimum amount of compression. At this point, the user rotates the foldable propeller 101 in a direction reverse to the locked rotation direction indicated on the blade 21 or propeller cap 12. When the fastening members 113 of the foldable propeller 101 touch a wall surface of the larger-aperture alignment hole of the guide hole 73 of the mounting member 70, the user lifts up the foldable propeller 101, completing the dismounting of the propeller.

This embodiment has the structure features and corresponding beneficial effects of the foldable propeller 101/102. In addition, multiple fastening members are further provided in the foldable propeller 101/102, a mounting member is provided on the rotor of the driving device, and an elastic assembly is disposed between the foldable propeller and the mounting member. Under the effect of the elastic assembly, the fastening member and the mounting member that cooperate with each other implement easy, fast, convenient and firm mounting and dismounting of the foldable propeller on the unmanned aerial vehicle.

### Embodiment 5

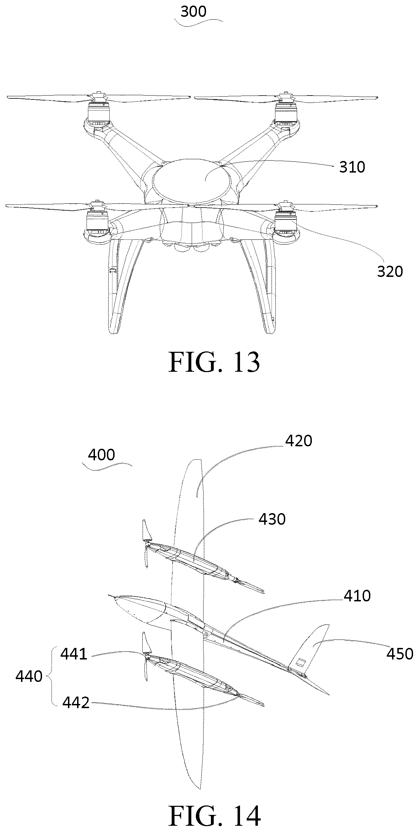

Referring to FIG. 13, FIG. 13 shows an unmanned aerial vehicle 300 according to an embodiment of the present application. The unmanned aerial vehicle 300 includes a vehicle body 310 and a power assembly 320 mounted on the vehicle body 310. The power assembly may be the power assembly 201 described in Embodiment 3 or may be the power assembly 202 described in Embodiment 4.

In this embodiment, when the power assembly 320 of the unmanned aerial vehicle 300 is the power assembly 201 described in Embodiment 3, it has structure features and beneficial effects corresponding to Embodiment 3. When the power assembly 320 of the unmanned aerial vehicle 300 is the power assembly 202 described in Embodiment 4, it has structure features and beneficial effects corresponding to Embodiment 4. Details are not described herein again.

### Embodiment 6

Referring to FIG. 14, FIG. 14 shows another unmanned aerial vehicle 400 according to an embodiment of the present application. The unmanned aerial vehicle 400 is a tilt-rotor unmanned aerial vehicle (that is, the unmanned aerial vehicle shown in FIG. 14), and includes: a vehicle body 410, a main wing 420, a stub wing 430, a power assembly 440 and an empennage 450. The empennage 450 is fixedly mounted at the rear of the vehicle body 410. The main wing 420 is fixedly mounted on the vehicle body 410. The stub wing 430 is fixedly mounted on the main wing 420. The power assembly 440 includes a front-end power assembly 441 and a rear-end power assembly 442. The front-end power assembly 441 is mounted at a front end of the stub wing 430, and the rear-end power assembly 442 is mounted at a rear end of the stub wing 430.

In this embodiment, the front-end power assembly 441 is used for providing main flight power for the unmanned aerial vehicle 400. Regardless of whether the vehicle is in a vertical lift flight attitude or horizontal cruise flight attitude, it is necessary to start the front-end power assembly 441 to provide an upward lift force or a forward pulling force for the unmanned aerial vehicle 400. The front-end power assembly 441 may be any type of power assembly, for example, a conventional power assembly, the power assembly 201 described in Embodiment 3 or the power assembly 202 described in Embodiment 4, which is specifically limited in this embodiment of the present application.

Particularly, when the front-end power assembly 441 is the power assembly 201 described in Embodiment 3 or the power assembly 202 described in Embodiment 4, the front-end power assembly 441 needs to provide main flight power for the unmanned aerial vehicle 400. Therefore, in order to prevent the blade assemblies 20 of the foldable propeller thereof from being folded upward with respect to the propeller hub 10 under the effect of an excessively large pulling force (for example, if the unmanned aerial vehicle 400 is in a vertical lift state currently, the blade assemblies 20 are easily folded upward when an excessively large upward pulling force is exerted on the blade assemblies 20; if the unmanned aerial vehicle 400 is in a horizontal cruise state currently, as shown in FIG. 14, the blade assemblies 20 are easily folded leftward when an excessively large pulling force is exerted on the blade assemblies 20), the foldable propeller shown in FIG. 1 can be selected. That is, the propeller hub 10 of the foldable propeller includes limiting stoppers 13 provided corresponding to the blade assemblies 20. When the foldable propeller rotates, the limiting stoppers 13 abut against the ends, which are pivotally connected to the propeller hub, of the blade assemblies 20 of the foldable propeller.

In this embodiment, the rear-end power assembly 442 is used for assisting the front-end power assembly 441 in providing flight power for the unmanned aerial vehicle 400. Generally, when the unmanned aerial vehicle 400 is in a vertical lift flight attitude, a larger lift force needs to be provided for the unmanned aerial vehicle 400. In this case, the front-end power assembly 441 and the rear-end power assembly 442 need to be started at the same time. When the unmanned aerial vehicle 400 is in a horizontal cruise flight attitude, a smaller pulling force is needed. In order to reduce the energy consumption of the unmanned aerial vehicle 400, it is feasible to start only the front-end power assembly 441 while stopping the rear-end power assembly 442. Therefore, in order to reduce a flight resistance produced by the propeller in the rear-end power assembly 442 when the rear-end power assembly 442 stops working, in this embodiment, the rear-end power assembly 442 uses a structure substantially the same as that of the power assembly 201 described in the Embodiment 3 or the power assembly 202 described in the Embodiment 4. The difference lies in that the foldable propeller in the rear-end power assembly 442 omits the limiting stoppers provided in the propeller hub, so that the blade assemblies thereof can be folded upward with respect to the propeller hub under the effect of an external force.

In this embodiment, when the unmanned aerial vehicle 400 needs to be in a vertical lift flight attitude, the stub wing 430 is tilted so that the front-end power assembly 441 and the rear-end power assembly 442 are parallel to the ground. In this case, the front-end power assembly 441 and the rear-end power assembly 442 can be started at the same time to provide an upward lift force for the unmanned aerial vehicle 400. Vertical ascending or descending of the unmanned aerial vehicle 400 is implemented by controlling the magnitude of the lift force. Definitely, in actual application, if the front-end power assembly 441 can provide a sufficient lift force, it is also feasible to start only the front-end power assembly 441 while the rear-end power assembly 442 is not started. In this case, the blades of the foldable propeller in the rear-end power assembly 442 are folded downward under the joint effect of wind and gravity (that is, the blades are folded upward with respect to the propeller hub). When the unmanned aerial vehicle 400 needs to be in a horizontal cruise flight attitude (a leftward horizontal cruise state is shown in FIG. 14), the stub wing 430 is tilted so that the front-end power assembly 441 and the rear-end power assembly 442 are perpendicular to the ground. In order to reduce energy consumption, only the front-end power assembly 441 may be started to provide a horizontal forward pulling force for the unmanned aerial vehicle 400, while the rear-end power assembly 442 may be stopped. When the rear-end power assembly 442 stops working, the blades of the foldable propeller in the rear-end power assembly 442 are folded upward with respect to the propeller hub (as shown in FIG. 14, the blades are folded rightward) under the effect of wind opposite to the forward direction of the unmanned aerial vehicle 400. It can be understood that in this embodiment, in description of the folding of the blade assemblies with respect to the propeller hub, it is assumed by default that a side of the propeller hub which is connected to the blade assemblies is an upper side, and a side of the propeller hub which is connected to the driving device is a lower side.

When the unmanned aerial vehicle 400 provided by this embodiment flies (especially in a horizontal cruise), it is possible to start only the front-end power assembly while the rear-end power assembly is stopped, so as to reduce energy consumption. Moreover, after the rear-end power assembly stops working, the blade assemblies of the propeller in the rear-end power assembly are folded upward with respect to the propeller hub under the effect of wind, thus reducing a flight resistance.

Finally, it should be noted that the foregoing embodiments are merely used for illustrating rather than limiting the technical solutions of the present application. According to the idea of the present application, the foregoing embodiments or technical features in different embodiments can be combined, and steps can be implemented in any order. Besides, there are many other variations of different aspects of the present application, and the variations are not provided in details to make the description simple and clear. Although the present application is described in detail with reference to the foregoing embodiments, a person of ordinary skill in the art should understand that modifications can be made to the technical solutions described in the embodiments above, or equivalent replacements can be performed on some technical features in the technical solutions. These modifications or replacements do not cause the essence of the corresponding technical solution to depart from the scope of the technical solutions of the embodiments of the present application.

## Claims

1. A foldable propeller, comprising: a propeller hub, at least two blade assemblies, and a connecting member used for pivotally connecting the propeller hub and the blade assemblies, wherein each blade assembly is rotatable with respect to the propeller hub, and a rotation axis of each blade assembly is perpendicular to an axial central line of the propeller hub.

2. The foldable propeller according to claim 1, wherein,
the blade assembly comprises a blade and a pivot connection member mounted at an end of the blade which is pivotally connected to the propeller hub;
the pivot connection member comprises a pivot connection hole, an axial central line of the pivot connection hole being perpendicular to the axial central line of the propeller hub; and
the connecting member penetrates the pivot connection hole to mount the blade on the propeller hub.

3. The foldable propeller according to claim 2, wherein,
the end of the blade which is pivotally connected to the propeller hub comprises a first side and a second side that are opposite to each other;
the pivot connection member further comprises a first abutting portion and a second abutting portion that are opposite to each other, and a communicating portion connecting the first abutting portion and the second abutting portion, the pivot connection hole being provided in the communicating portion and penetrating the first abutting portion and the second abutting portion; and
the communicating portion penetrates the end of the blade which is pivotally connected to the propeller hub, a side of the first abutting portion which faces the second abutting portion abuts against the first side, and a side of the second abutting portion which faces the first abutting portion abuts against the second side.

4. The foldable propeller according to claim 2 or 3, wherein the pivot connection member is a metal member and is connected to the blade in an injection molding manner.

5. The foldable propeller according to any of claims 1 to 4, wherein the propeller hub comprises a first clamping arm and a second clamping arm that are opposite to each other; and
the blade assembly is mounted between the first clamping arm and the second clamping arm, and a uniform gap is provided between the blade assembly and the first clamping arm, and/or a uniform gap is provided between the blade assembly and the second clamping arm.

6. The foldable propeller according to any of claims 1 to 5, wherein the propeller hub comprises limiting stoppers provided corresponding to the blade assemblies, and when the foldable propeller rotates, the limiting stoppers abut against ends of the blade assemblies which are pivotally connected to the propeller hub.

7. The foldable propeller according to any of claims 1 to 6, wherein the propeller hub comprises limiting grooves provided corresponding to the blade assemblies, and each limiting groove keeps consistent with a root shape of the corresponding blade assembly.

8. A power assembly, comprising a driving device and the foldable propeller according to any of claims 1 to 7 mounted on the driving device.

9. The power assembly according to claim 8, wherein the propeller hub comprises limiting stoppers provided corresponding to the blade assemblies, and when the foldable propeller rotates, the limiting stoppers abut against ends of the blade assemblies which are pivotally connected to the propeller hub.

10. The power assembly according to claim 8 or 9, wherein the propeller hub comprises limiting grooves provided corresponding to the blade assemblies, and each limiting groove keeps consistent with a root shape of the corresponding blade assembly.

11. An unmanned aerial vehicle, comprising the power assembly according to any of claims 8 to 10.

12. An unmanned aerial vehicle, comprising:
a vehicle body;
a main wing, fixedly mounted at the vehicle body;
a stub wing, fixedly mounted at the main wing;
a power assembly, comprising a front-end power assembly and a rear-end power assembly, the front-end power assembly being mounted at a front end of the stub wing, and the rear-end power assembly being mounted at a rear end of the stub wing;
and,
an empennage, fixedly mounted at the rear of the vehicle body;
wherein the rear-end power assembly is the power assembly according to claim 8 or 10.

13. The unmanned aerial vehicle according to claim 12, wherein the front-end power assembly is a power assembly according to claim 9.
